# EUROPEAN PATENT APPLICATION

(11) **EP 0 667 507 A2**
(43) Date of publication of application: **16.08.1995**
(21) Application number: 95300824.0
(22) Date of filing: 09.02.1995
(51) Int. Cl.: G01B 3/10

(54) **Improvements to tape measures**

(30) Priority: 11.02.1994 GB 9402677
(71) Applicant: FISCO PRODUCTS LIMITED, Rayleigh Essex SS6 7XD (GB)
(72) Inventor: Burton, Stanley James, Rayleigh, Essex SS6 7AF (GB); Lee, Barry Howard, Rayleigh, Essex SS6 7LT (GB)
(74) Representative: Ford, Michael Frederick

(57) **Abstract**

A tape measure has a case (1) enclosing a centre post (4) and a wind-up return spring (3) coiled around the centre post (4). A spool means (7) supports a measuring blade (2) in a coil surrounding the wind-up spring (3). The blade (2) is coupled to the spring (3) such that drawing the blade (2) out from the case (1) winds up the spring (3) around the centre post (4). The tape measure is arranged such that the travel of the inner end of the blade (2) around the axis of the centre post (4) during full extension of the blade (2) exceeds the maximum available travel of the outer end of the return spring (3) relative to the centre post (4). This permits a longer length of blade (2) to be extended from a case (1) of a given capacity. It may be achieved by rotatably mounting the post (4) in the case (1) so that rotation of the post (4) permits additional turns of spool (7) beyond the limit of spring (3).

## Description

This invention relates to tape measures incorporating a spring-driven return mechanism to rewind the extended tape onto the tape spool.

Known tape measures have a case with a fixed centre post extending across the case. A coil spring is wound around the centre post, with its inner end fastened to the post. The measuring blade lies in a coil radially outwardly from the coil spring. The coiled measuring blade is wound on a spool which rotates around the centre post, or is supported by a pair of discs which function analogously to a spool and likewise rotate around the centre post.

The outer end of the coil spring is connected to the inner end of the blade. As the blade is pulled out of the case, the coil spring is wound more tightly around the centre post. It thus functions a return spring and the blade is drawn out against the bias of this spring.

When the tape is fully extended, the return spring is fully wound around the centre post preventing any further rotation of the spool. If a longer tape were attached to the spool, the last part could not be extended as spool rotation, and therefore usable tape length, is limited by the size of the spring which can be housed. Longer tapes therefore require larger tape cases to accommodate both the longer tape and the correspondingly longer spring.

For example, the longest feasible tape length for a conventional spring-return pocket tape measure is considered to be 10m. A longer length would be desirable but the tape case then becomes too large to be conveniently handled by the user.

The present invention provides a tape measure having a case enclosing a centre post, a wind-up return spring coiled around the centre post, and a spool means supporting a measuring blade in a coil surrounding the wind-up spring, the blade being coupled to the spring such that drawing the blade out from the case winds up the spring around the centre post, characterised in that the travel of the inner end of the blade around the axis of the centre post during full extension of the blade exceeds the maximum available travel of the outer end of the spring relative to the centre post.

In a preferred form of this invention the centre post is rotatable relative to the case against a resilient bias. This bias may be provided by a second coil spring acting between the case and the rotatable centre post.

In one embodiment the post and the spool are each rotatable against a separate resilient bias. Suitably each resilient bias may be provided by a spring.

Preferably the spool rotates against a return spring connected at one end to the centre post and at its other end to the spool, the post rotating against a second spring connected at one end to the post and at the other end to the case. When the main return spring is fully wound, further turns of the spool are permitted by the rotation of the post. The length of extra tape made possible by this arrangement depends on the length of the second spring.

Another possibility for providing this resilient bias to the centre post is to couple the spool means to the centre post through gearing, so that the rotation of the spool drives rotation of the post, in the same direction against the bias of the main wind-up spring as the blade is drawn out of the case. As the spool rotates x turns around the post to wind up the return spring, so the post rotates y turns about its own axis, allowing x + y turns of the spool in total. The length of extra tape which may be extended is determined by the gearing ratio between the spool and the post.

In another form of this invention, means are provided which permit the centre post to rotate sufficiently that the full length of the blade can be drawn out from the case, and which permit the centre post to be rotated by hand, or a drive mechanism other than a spring, to rewind the tape fully into the case.

If the centre post is rotatable the inner end of the blade may be directly coupled to the outer end of the coil spring. As the blade is drawn out to its fullest extent, the travel of the inner end of the blade around the axis of the centre post will exceed the travel of the outer end of the coil spring around the (simultaneously rotating) centre post.

In yet another form of the invention the centre post is fixed and the inner end of the measuring blade is coupled to the outer end of the coil spring through gearing, so that the inner end of the blade can travel further than the outer end of the coil spring.

The spool means may be a spool which defines a U-section channel in which the measuring blade coils, or it may be provided by a pair of discs which are shaped to support the edges of the coil of the tape, but do not form a complete U-section channel. Pairs of discs and spools with a U-section channel are both in common use in known tape measures.

The centre post is desirably constructed as a substantially solid cylindrical post. Connection of a spring to such a post may then be by insertion of an end of the spring to a slot in the post. However, a post could be provided by a hollow tube, if desired.

An embodiment of the invention will now be described in detail, by way of example, with reference to the accompanying drawings in which:-
Fig. 1 is a perspective view of a pocket tape measure according to the invention;
Fig. 2 is a cross-section taken along line II-II of Fig. 1;
Fig. 3 is a cross-section taken along line III-III of Fig. 2.

In this embodiment a case 1 houses a centre post 4, on which is rotatably mounted a spool 7. The spool 7 has a U-section outer portion in which the blade 2 of the tape measure is wound and a hollow centre portion, bounded on one side by a wall 11. The main return spring 3 is housed in the hollow centre portion of the spool 7, coiled around the centre post 4 and enclosed by a cover 8 which serves as another wall of the spool. The inner end of the main return spring 3 is attached to the centre post 4 at location 10 which may be a slot formed in the post 4 to receive the end of the spring 3.

The inner end of the blade 2 and the outer end of the return spring 3 may be separately affixed to the spool 7 or they may pass through a slot (not shown) in the spool 7 and be attached to the inner end of the blade.

The centre post 4 is rotatably mounted on the case 1 by means of a peg 5 and cup 12 which each project from the inside walls of case 1. A secondary coil spring 6 is wound around the post 4, its inner end being affixed to the post 4 and its outer end to the case 1 at peg 9.

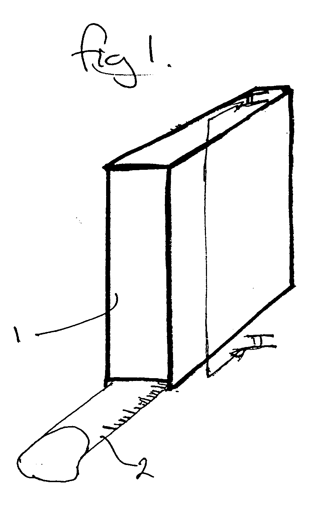

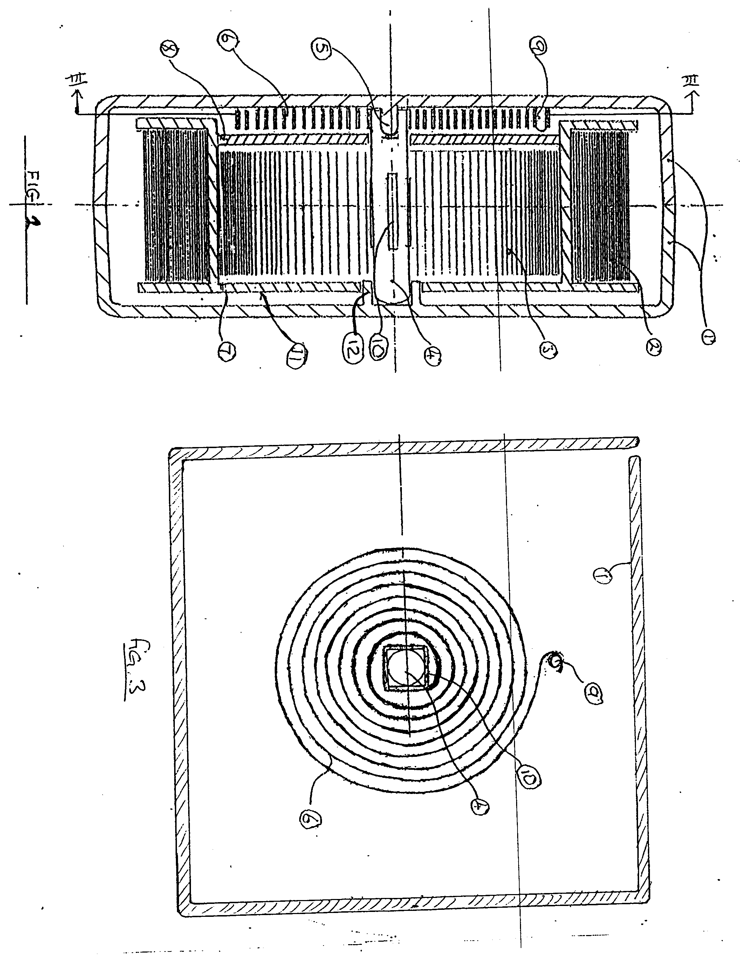

The arrangement of the secondary spring is shown in plan view in Fig. 3.

As the blade 2 is extended through the mounts 13 of the case 1, the rotation of the spool 7 winds the main return spring 3 more tightly around the centre post 4. When the main return spring 3 can be wound no further, the centre post 4 is rotated against additional spring 6, which also winds up around the centre post. The post's rotation permits the further turns of the spool 7 which are needed to allow extension of the remaining tape blade 2.

On retraction, the bulk of the blade 2 is rewound by the action of the main return spring unwinding from around the centre post 4 and rotating the spool 7 about the post. Again the additional turns required are provided by rotation of the centre post as the additional spring unwinds.

The relative stiffness of the two springs will determine whether rotation of the spool around the post and rotation of the post relative to the case will take place consecutively (as described above) or concurrently.

## Claims

1. A tape measure having a case (1) enclosing a centre post (4), a wind-up return spring (3) coiled around the centre post (4), and a spool means (7) supporting a measuring blade (2) in a coil surrounding the wind-up spring (3), the blade (2) being coupled to the spring (3) such that drawing the blade (2) out from the case (1) winds up the spring (3) around the centre post (4), characterised in that the travel of the inner end of the blade (2) around the axis of the centre post (4) during full extension of the blade (2) exceeds the maximum available travel of the outer end of the spring (3) relative to the centre post (4).

2. A tape measure according to claim 1, wherein the centre post (4) is rotatable relative to the case (1).

3. A tape measure according to claim 2, wherein the centre post (4) is rotatable relative to the case (1) against a resilient bias.

4. A tape measure according to claim 3, wherein the bias is provided by a second coil spring (6) acting between the case (1) and the rotatable centre post (4).

5. A tape measure according to claim 3 or claim 4, wherein the post (4) and the spool (7) are each rotatable against a separate resilient bias.

6. A tape measure according to claim 5, wherein the spool (7) rotates against a return spring (3) acting between the centre post (4) and the spool (7), the post (4) rotating against a second spring (6) acting between the post (4) and the case (1).

7. A tape measure according to claim 1 or claim 2, wherein the spool means (7) is coupled to the centre post (4) through gearing, so that the rotation of the spool (7) drives rotation of the post (4) in the same direction against the bias of the wind-up spring (3) as the blade (2) is drawn out of the case (1).

8. A tape measure according to claim 1 or claim 2, wherein means are provided which permit the centre post (4) to rotate sufficiently to allow full extension of the blade (2) from the case (1), and which permit the centre post (4) to be rotated by a mechanism other than a spring, to rewind the blade (2) fully into the case (1).

9. A tape measure according to claim 1, wherein the centre post (4) is fixed relative to the case (1) and the inner end of the measuring blade (2) is coupled to the outer end of the wind-up return spring (3) through gearing, so that the inner end of the blade (2) can travel further than the outer end of the wind-up return spring (3).
